# EUROPEAN PATENT APPLICATION

(11) **EP 1 001 650 A2**
(43) Date of publication of application: **17.05.2000**
(21) Application number: 99402812.4
(22) Date of filing: 12.11.1999
(51) Int. Cl.: H04Q 11/04

(54) **Communication apparatus and control method therefor**

(30) Priority: 13.11.1998 JP 32404598; 28.10.1999 JP 30752899
(71) Applicant: CANON KABUSHIKI KAISHA, Ohta-ku Tokyo 146-8501 (JP)
(72) Inventor: Shoji, Fumio, Ohta-ku, Tokyo (JP)
(74) Representative: Rinuy, Santarelli

(57) **Abstract**

This invention is to allow flexible setup in association with the communication mode, to allow setup whether a communication apparatus is to accept an incoming call in accordance with the presence/absence of information representing a communication mode, which is contained in incoming call information, and to allow setup whether the communication apparatus is to make an outgoing call using information added with information representing a communication mode.

## Description

### BACKGROUND OF THE INVENTION

### FIELD OF THE INVENTION

The present invention relates to a communication apparatus and a control method therefor.

### DESCRIPTION OF THE RELATED ART

In a communication apparatus connected to an ISDN (Integrated Services Digital Network) architecture, a SETUP (call setup) message is transmitted upon making an outgoing call. In this message, the communication mode of the source terminal is set in a bearer capability information element (BC) including information representing line exchange or packet exchange, information representing audio information or unlimited digital information, or information representing whether the transfer rate is 64 kbps, a low layer compatibility information element (LLC), and a high layer compatibility information element (HLC) including information representing, e.g., whether the capability of the terminal is a telephone, G4 FAX, or G3 FAX. Upon receiving the SETUP message, the destination terminal compares the communication mode set in the BC, LLC, and HLC in the SETUP message with its own communication mode. If the communication modes coincide with each other, that terminal accepts the call.

The low layer compatibility information element LLC is of the same information (coding) type as the bearer capability information element BC as an essential parameter. However, the information (coding) type of high layer compatibility information element HLC changes depending on the type of terminal. The low layer compatibility information element LLC and high layer compatibility information element HLC in the SETUP message are optional information elements and are not essential. Whether the two information elements are to be added depends on the implementation of a terminal.

For this prior art, assume that two terminals (terminal 1 and terminal 2) which have the same BC in the SETUP messages but different high layer compatibility information elements HLC (different communication modes) are connected to an ISDN via a bus. When these terminals receive a SETUP message having no high layer compatibility information element HLC, it is very hard to determine whether terminal 1 or terminal 2 should accept the SETUP message. In this case, a terminal that must not accept may erroneously accept the call.

### SUMMARY OF THE INVENTION

It is an object of the present invention to allow flexible setup associated with the communication mode.

It is another object of the present invention to allow setup whether a communication apparatus is to accept an incoming call in accordance with the presence/absence of information representing a communication mode, which is contained in the call.

It is still another object of the present invention to allow setup whether a communication apparatus is to place an outgoing call using information added with information representing a communication mode.

Other features and advantages of the present invention will be apparent from the following description taken in conjunction with the accompanying drawings, in which like reference characters designate the same or similar parts throughout the figures thereof.

### BRIEF DESCRIPTION OF THE DRAWING

Fig. 1 is a schematic block diagram showing the arrangement of a communication apparatus according to an embodiment;
Fig. 2 is a view showing the memory map of modules when the present invention is practiced using a storage medium;
Fig. 3 is a flow chart showing incoming call processing according to the embodiment;
Fig. 4 is a flow chart showing outgoing call processing according to the embodiment;
Fig. 5 is a view showing a coding example of a SETUP (call setup) message;
Fig. 6 is a flow chart for explaining registration of a incoming call control method when no bearer capability information element (BC) is detected;
Fig. 7 is a flow chart for explaining registration of a incoming call control method when the bearer capability information element (BC) does not coincide with the communication mode of the self terminal;
Fig. 8 is a flow chart for explaining registration of a incoming call control method when the high layer compatibility information element (HLC) does not coincide with the communication mode of the self terminal;
Fig. 9 is a flow chart for explaining registration of a incoming call control method when no high layer compatibility information element (HLC) is detected; and
Fig. 10 is a control flow chart for registering whether the high layer compatibility information element (HLC) is to be automatically added upon making an outgoing call.

### DETAILED DESCRIPTION OF THE PREFERRED EMBODIMENT

The embodiment of the present invention will be described below in detail with reference to the accompanying drawings.

This embodiment assumes that two communication apparatuses having different communication modes are connected to an ISDN (Integrated Services Digital Network) via a bus. When the communication apparatuses receive a SETUP message having no high layer compatibility information element (HLC), they accept or rejects or neglects the call on the basis of information set in advance. Hence, one of the communication terminals can properly accept the call.

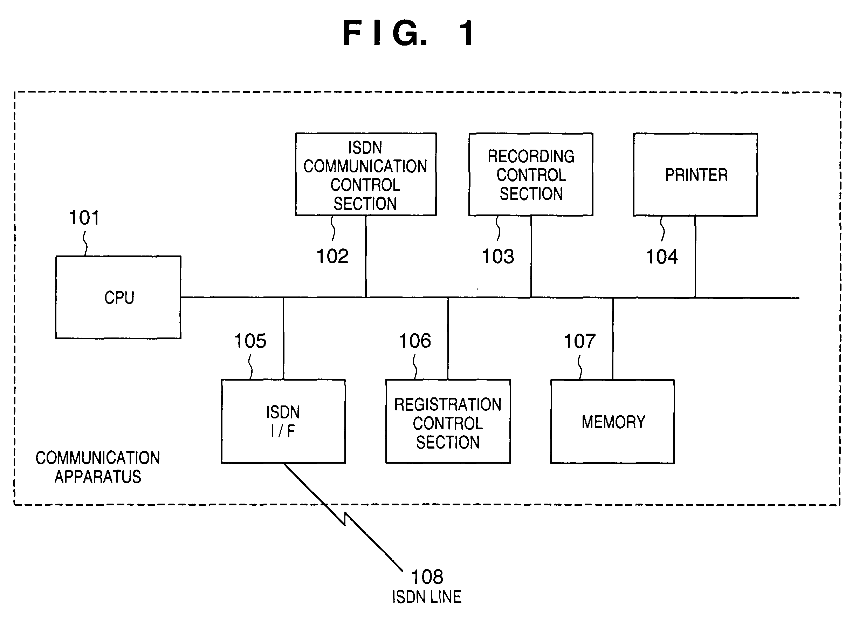

Fig. 1 is a schematic block diagram showing the arrangement of a communication apparatus according to this embodiment. Referring to Fig. 1, a system control section (CPU) 101 controls the entire apparatus. An ISDN communication control section 102 manages the D channel and controls its protocol. A recording control section 103 converts received data or communication log list to a data format for output to a printer or controls the operation of the printer. A printer 104 prints various data.

An ISDN i/f section 105 controls the electrical interface to an ISDN. A registration control section 106 registers or controls various setups for the apparatus in accordance with user's operation on an operation section (not shown). A memory 107 stores set values and data registered by the registration control section 106. The memory 107 is used to store pieces of information and therefore may be a large-capacity storage device such as a hard disk. An ISDN line 108 is physically connected to an ISDN.

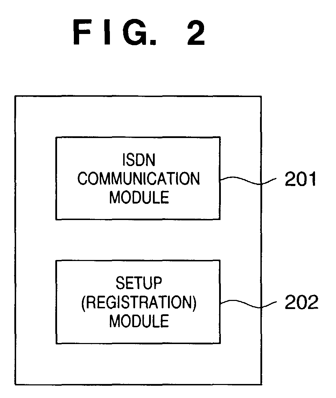

Fig. 2 is a view showing the memory map of modules when the present invention is practiced using a storage medium. As shown in Fig. 2, at least an ISDN communication module 201 and setup (registration) module 202 are stored in the storage medium.

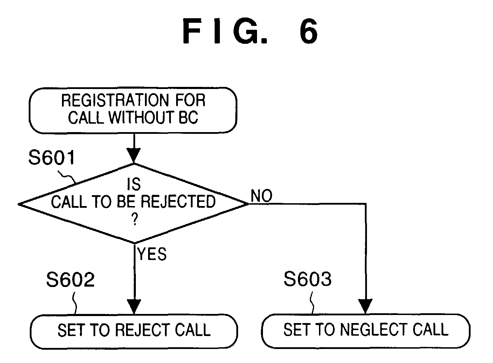

Registration control by the registration control section 106, which is performed in accordance with the operator's operation on the operation section (not shown) will be described next with reference to Figs. 6 to 10.

Fig. 6 is a flow chart for explaining registration of a incoming call control method when no bearer capability information element (BC) is detected in the SETUP message upon detection of an incoming call.

Referring to Fig. 6, when the operation section (not shown) is operated to register a incoming call control method when no bearer capability information element (BC) is detected, in step S601 the CPU 101 displays, on a display section (not shown), a message for inquiring whether the terminal is to reject the call. If YES in step S601, the CPU 101 transmits a RELEASE-COMPLETE message to the registration control section 106 to store setup for rejecting the call in the memory 107 in step S602. If NO in step S601, the CPU 101 transmits no message even when the SETUP message is detected, thereby storing, in the memory 107, setup for neglecting the call having the received SETUP message in step S603.

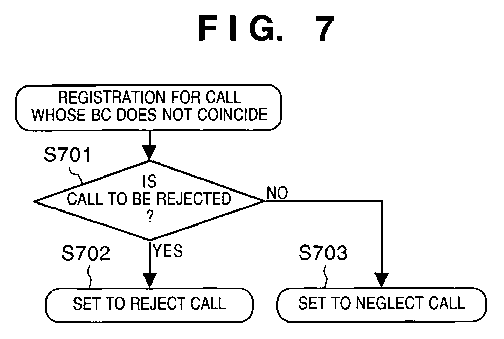

Fig. 7 is a flow chart for explaining registration of a incoming call control method when the bearer capability information element (BC) detected in the SETUP message upon detection of an incoming call does not coincide with the communication mode of the self terminal.

Referring to Fig. 7, when the operation section (not shown) is operated to register a incoming call control method when the bearer capability information element (BC) does not coincide, in step S701 the CPU 101 displays, on the display section (not shown), a message for inquiring whether the terminal is to reject the call. If YES in step S701, the CPU 101 transmits a RELEASE-COMPLETE message to the registration control section 106 to store setup for rejecting the call in the memory 107 in step S702. If NO in step S701, the CPU 101 transmits no message even when the SETUP message is detected, thereby storing, in the memory 107, setup for neglecting the call having the received SETUP message in step S703.

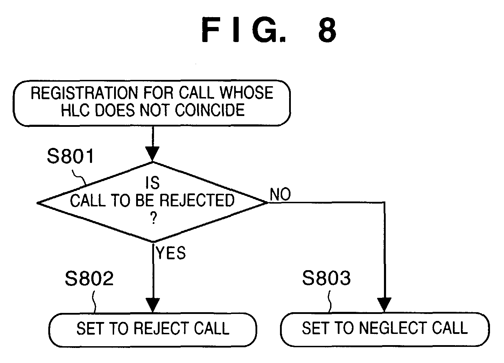

Fig. 8 is a flow chart for explaining registration of a incoming call control method when the high layer compatibility information element (HLC) detected in the SETUP message upon detection of an incoming call does not coincide with the communication mode of the self terminal.

Referring to Fig. 8, when the operation section (not shown) is operated to register a incoming call control method when the high layer compatibility information element (HLC) does not coincide, in step S801 the CPU 101 displays, on the display section (not shown), a message for inquiring whether the terminal is to reject the call. If YES in step S801, the CPU 101 transmits a RELEASE-COMPLETE message to the registration control section 106 to store setup for rejecting the call in the memory 107 in step S802. If NO in step S801, the CPU 101 transmits no message even when the SETUP message is detected, thereby storing, in the memory 107, setup for neglecting the call having the received SETUP message in step S803.

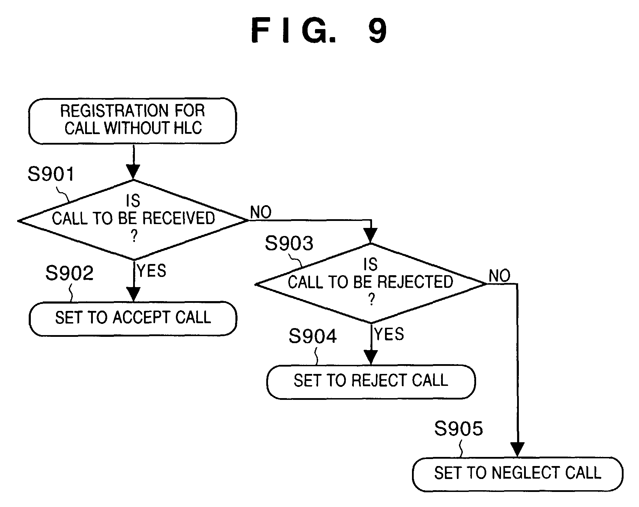

Fig. 9 is a flow chart for explaining registration of a incoming call control method when no high layer compatibility information element (HLC) is detected in the SETUP message upon detection of an incoming call.

Referring to Fig. 9, when the operation section (not shown) is operated to register a incoming call control method when no high layer compatibility information element (HLC) is detected, in step S901 the CPU 101 displays, on the display section (not shown), a message for inquiring whether the terminal is to accept the call.

If YES in step S901, the CPU 101 causes the registration control section 106 to store setup for responding to the call in the memory 107 in step S902.

If NO in step S901, the CPU 101 displays a message for inquiring whether the terminal is to reject the call in step S903. If YES in step S903, the CPU 101 transmits a RELEASE-COMPLETE message to the registration control section 106 to store setup for rejecting the call in the memory 107 in step S904. If NO in step S903, the CPU 101 transmits no message even when the SETUP message is detected, thereby storing, in the memory 107, setup for neglecting the call having the received SETUP message in step S905.

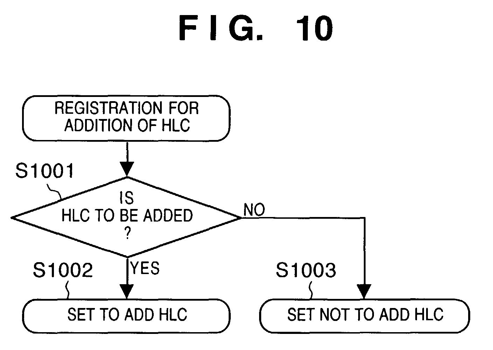

Fig. 10 is a control flow chart for registering whether the high layer compatibility information element (HLC) is to be automatically added upon making an outgoing call.

Referring to Fig. 10, when the operation section (not shown) is operated to register whether the high layer compatibility information element (HLC) is to be added, in step S1001 the CPU 101 displays, on the display section (not shown), a message for inquiring whether the high layer compatibility information element (HLC) is to be automatically added. If YES in step S1001, the CPU 101 causes the registration control section 106 to store setup for automatically adding the high layer compatibility information element (HLC) in the memory 107 in step S1002. If NO in step S1001, the CPU 101 stores setup for adding no high layer compatibility information element (HLC) in the memory 107 in step S1003.

The setups described above with reference to Figs. 6 to 10 are stored in advance. In detecting reception of an incoming call or initiation of an outgoing call, incoming call control or outgoing call control is done with reference to the setups stored in the memory 107.

In the above arrangement, incoming call processing performed in accordance with setup whether the terminal is to accept a call on the basis of the presence/absence of a bearer capability information element (BC) or high layer compatibility information element (HLC) in a SETUP message, which is registered by the registration control section 106 in advance, will be described.

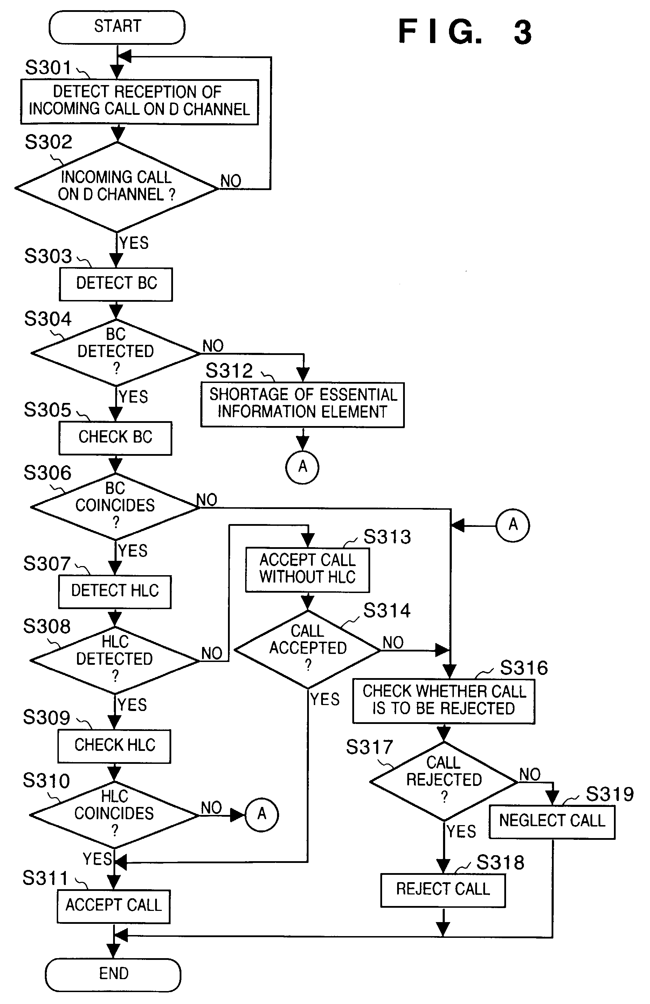

Fig. 3 is a flow chart showing incoming call processing according to the embodiment. First, in step S301, the ISDN communication control section 102 monitors arrival of any incoming call on the D channel while controlling the ISDN i/f section 105. Instep S302, when a SETUP message received on the D channel is detected, the flow advances to step S303 to detect the bearer capability information element (BC) (to be described later) in the SETUP message.

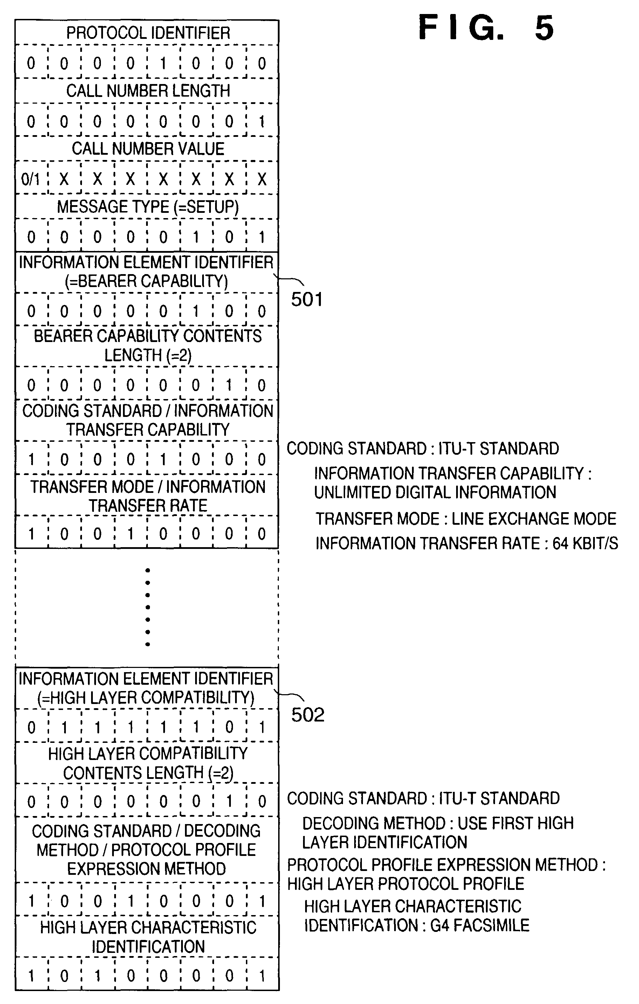

Fig. 5 is a view showing a coding example of a SETUP (call setup) message. Referring to Fig. 5, reference numeral 501 denotes a bearer capability information element (BC). In this information element, the ITU-T standard is set as the coding standard, unlimited digital information is set as the information transfer capability, the line exchange mode is set as the transfer mode, and 64 Kbit/s is set as the information transfer rate. Reference numeral 502 denotes a high layer compatibility information element (HLC). In this information element, G4 facsimile is set as the high layer characteristic identification.

The bearer capability information element (BC) has information representing whether the transfer mode is line exchange or packet exchange, information representing whether the information transfer capability is audio or unlimited digital information, information representing whether the information transfer rate is 64 Kbit/s, and the like. The high layer compatibility information element (HLC) has information representing whether the terminal capability is a telephone, G4 FAX, or G3 FAX, and the like.

Referring back to Fig. 3, if the bearer capability information element (BC) 501 is detected in the received SETUP message in step S304, the flow advances to step S305 to check the contents of the detected bearer capability information element (BC) 501. When the contents coincide with the communication mode of the self terminal in step S306, the flow advances to step S307 to detect the high layer compatibility information element (HLC) 502 in the SETUP message.

When the high layer compatibility information element (HLC) 502 is detected in the received SETUP message in step S308, the flow advances to step S309 to check the contents of the detected high layer compatibility information element (HLC) 502. When the contents coincide with the communication mode of the self terminal in step S310, the flow advances to step S311 to accept the call.

If no high layer compatibility information element (HLC) 502 is detected in step S308, the flow advances to step S313. To determine whether the terminal is to accept the call when no high layer compatibility information element (HLC) 502 is present in the received SETUP message, whether the terminal is to accept the call is determined with reference to the setup "whether the terminal is accept the call when no HLC is present", which is registered in the apparatus in advance by the registration control section 106.

When the determination result in step S313 is YES in step S314, the flow advances to step S311 to accept the call. If it is NO in step S314, the flow advances to step S316 to check whether the call is to be rejected. In step S317, the contents registered by the registration control section 106 are referred to, and it is determined whether a RELEASE-COMPLETE message is to be sent to reject the received SETUP message, or no message is to be sent to neglect the received SETUP message.

If YES in step S317, the flow advances to step S318. A RELEASE-COMPLETE message is sent for the received SETUP message to reject the call. If NO in step S317, the flow advances to step S319. No message is sent for the received SETUP message, and processing is ended. The state returns to that before reception of the SETUP message.

When no bearer capability information element (BC) 501 is detected in the received SETUP message in step S304, the flow advances to step S312. The contents registered by the registration control section 106 are referred to, and a value representing the shortage of essential information element is set as the reason display value to be set in the RELEASE-COMPLETE message. In step S316, it is determined whether the RELEASE-COMPLETE message is to be sent to reject the received SETUP message, or no message is to be sent to neglect the received SETUP message. The subsequent processing is the same as that from step S317, and a detailed description thereof will be omitted.

When the detected bearer capability information element (BC) 501 does not coincide with the communication mode of the self terminal in step S306, the flow advances to step S316. The contents registered by the registration control section 106 are referred to, and it is determined whether a RELEASE-COMPLETE message is to be sent to reject the received SETUP message, or no message is to be sent to neglect the received SETUP message. The subsequent processing is the same as that from step S317, and a detailed description thereof will be omitted.

When the high layer compatibility information element (HLC) 502 checked in step S310 does not coincide with the communication mode of the self terminal, the flow advances to step S316. The contents registered by the registration control section 106 are referred to, and it is determined whether the RELEASE-COMPLETE message is to be sent to reject the received SETUP message, or no message is to be sent to neglect the received SETUP message. The subsequent processing is the same as that from step S317, and a detailed description thereof will be omitted.

Outgoing call processing performed in accordance with setup whether the high layer compatibility information element (HLC) 502 is to be added to a SETUP message upon making an outgoing call, which is registered by the registration control section 106 in advance, will be described.

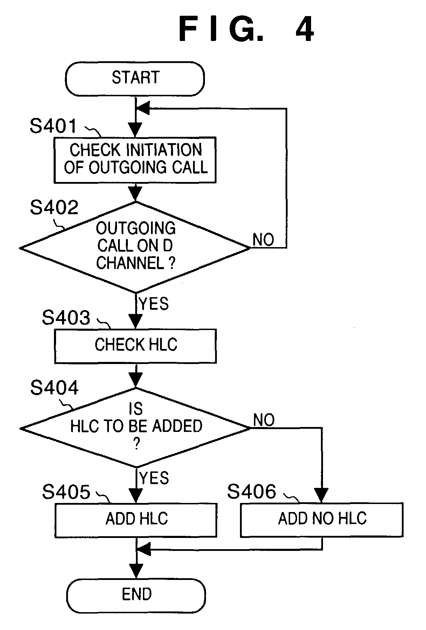

Fig. 4 is a flow chart showing outgoing call processing according to this embodiment. First, in step S401, the CPU 101 checks whether a predetermined calling operation has been made at the operation section (not shown). If it is determined in step S402 that the predetermined calling operation has been performed, the flow advances to step S403 to determine whether the high layer compatibility information element (HLC) 502 is added to the SETUP message to be sent with reference to the setup "whether the bearer capability information element (BC) 501 is to be added upon making an outgoing call", which is registered in advance by the registration control section 106. If it is determined in step S404 that the bearer capability information element (BC) is to be added, the flow advances to step S405 to set the high layer compatibility information element (HLC) 502 in the SETUP message to be sent.

If NO in step S404, the flow advances to step S406 not to set the high layer compatibility information element (HLC) 502 in the SETUP message to be sent.

When setup has been done not to add the high layer compatibility information element (HLC), the operator may be asked to confirm whether the high layer compatibility information element (HLC) 502 need not be added indeed. In confirming this, when an instruction for adding the high layer compatibility information element (HLC) is input, the SETUP message added with the high layer compatibility information element (HLC) is transmitted.

As described above, according to this embodiment, even when two terminals of different types, for which the bearer capability information element (BC) in the SETUP (call setup) message represents unlimited digital information, are connected to an ISDN via a bus and receive a SETUP message having no high layer compatibility information element (HLC), an ISDN communication apparatus with more reliable connection control can be provided.

The present invention may be applied to a system constituted by a plurality of devices (e.g., a host computer, an interface device, a reader, a printer, and the like) or an apparatus comprising a single device (e.g., a copying machine, a facsimile apparatus, or the like).

The object of the present invention is realized even by supplying a storage medium recording software program codes for realizing the functions of the above-described embodiment to a system or apparatus, and causing the computer (or a CPU or an MPU) of the system or apparatus to read out and execute the program codes stored in the storage medium.

In this case, the program codes read out from the storage medium realize the functions of the above-described embodiment by themselves, and the storage medium storing the program codes constitutes the present invention.

As the storage medium for supplying the program codes, a floppy disk, a hard disk, an optical disk, a magnetooptical disk, a CD-ROM, a CD-R, a magnetic tape, a nonvolatile memory card, a ROM, or the like can be used.

The functions of the above-described embodiment are realized not only when the readout program codes are executed by the computer but also when the OS (Operating System) running on the computer performs part or all of actual processing on the basis of the instructions of the program codes.

The functions of the above-described embodiment are also realized when the program codes read out from the storage medium are written in the memory of a function expansion board inserted into the computer or a function expansion unit connected to the computer, and the CPU of the function expansion board or function expansion unit performs part or all of actual processing on the basis of the instructions of the program codes.

As has been described above, according to the present invention, when arrival of a call from the digital network is detected, whether to response to or reject the call is controlled in accordance with the presence/absence of information representing the communication mode, so the user can accept only the call he or she desires.

In addition, incoming call control can be registered in correspondence with a case wherein information representing the communication mode is present/absent, including the high layer compatibility information element, or the information does not coincide.

As many apparently widely different embodiments of the present invention can be made without departing from the spirit and scope thereof, it is to be understood that the invention is not limited to the specific embodiments thereof except as defined in the appended claims.

## Claims

1. A communication apparatus comprising:
incoming call detection means for detecting incoming call information representing reception of an incoming call;
setup means for setting up whether said apparatus is to accept the call in accordance with the presence/absence of information representing a communication mode, the information being contained in the incoming call information; and
control means for controlling whether said apparatus is to accept the call on the basis of setup by said setup means.

2. The apparatus according to claim 1, wherein said communication apparatus is connected to a digital network.

3. The apparatus according to claim 2, wherein the digital network is an integrated services digital network.

4. The apparatus according to claim 3, wherein the information representing the communication mode contains a high layer compatibility information element in the integrated services digital network.

5. The apparatus according to claim 3, wherein the information representing the communication mode contains a bearer capability information element in the integrated services digital network.

6. The apparatus according to claim 3, wherein said setup means sets whether said apparatus is to accept the call when the communication mode represented by a bearer capability information element contained in the incoming call information coincides with the communication mode of said communication apparatus, and no high layer compatibility information element is contained in the incoming call information.

7. The apparatus according to claim 1, wherein said setup means can set up whether the call is to be rejected or neglected when said apparatus does not accept the call.

8. The apparatus according to claim 1, wherein said control means controls to reject or neglect the call when said apparatus does not accept the call.

9. A communication apparatus comprising:
setup means for setting up in advance whether said apparatus is to call using information added with information representing a communication mode; and
control means for controlling origination of an outgoing call on the basis of setup by said setup means.

10. The apparatus according to claim 9, wherein said communication apparatus is connected to a digital network.

11. The apparatus according to claim 10, wherein the digital network is an integrated services digital network.

12. The apparatus according to claim 11, wherein the information representing the communication mode is a high layer compatibility information element in the integrated services digital network.

13. A control method for a communication apparatus, comprising:
the incoming call detection step of detecting incoming call information representing reception of an incoming call;
the setup step of setting up whether said apparatus is to accept the call in accordance with the presence/absence of information representing a communication mode, the information being contained in the incoming call information; and
the control step of controlling whether said apparatus is to accept the call on the basis of setup in the setup step.

14. The method according to claim 13, wherein said communication apparatus is connected to a digital network.

15. The method according to claim 14, wherein the digital network is an integrated services digital network.

16. The method according to claim 15, wherein the information representing the communication mode contains a high layer compatibility information element in the integrated services digital network.

17. The method according to claim 15, wherein the information representing the communication mode contains a bearer capability information element in the integrated services digital network.

18. The method according to claim 15, wherein the setup step comprises setup whether said apparatus is to accept the call when the communication mode represented by a bearer capability information element contained in the incoming call information coincides with the communication mode of said communication apparatus, and no high layer compatibility information element is contained in the incoming call information.

19. The method according to claim 13, wherein the setup step comprises allowing to set up whether the call is to be rejected or neglected when said apparatus does not accept the call.

20. The method according to claim 13, wherein the control step comprises controlling to reject or neglect the call when said apparatus does not accept the call.

21. A control method for a communication apparatus, comprising:
the setup step of setting up in advance whether said apparatus is to call using information added with information representing a communication mode; and
the control step of controlling origination of an outgoing call on the basis of setup in the setup step.

22. The method according to claim 21, wherein said communication apparatus is connected to a digital network.

23. The method according to claim 22, wherein the digital network is an integrated services digital network.

24. The method according to claim 23, wherein the information representing the communication mode is a high layer compatibility information element in the integrated services digital network.

25. A computer-readable storage medium storing program codes of a communication control method, the program codes comprising:
a code of the incoming call detection step of detecting incoming call information representing reception of an incoming call;
a code of the setup step of setting up whether said apparatus is to accept the call in accordance with the presence/absence of information representing a communication mode, the information being contained in the incoming call information; and
a code of the control step of controlling whether said apparatus is to accept the call on the basis of setup in the setup step.

26. A computer-readable storage medium storing program codes of a communication control method, the program codes comprising:
a code of the setup step of setting up in advance whether said apparatus is to call using information added with information representing a communication mode; and
a code of the control step of controlling origination of an outgoing call on the basis of setup in the setup step.
